# EUROPEAN PATENT APPLICATION

(11) **EP 4 349 716 A1**
(43) Date of publication of application: **10.04.2024**
(21) Application number: 22199787.7
(22) Date of filing: 05.10.2022
(51) Int. Cl.: B64D 37/04, B64D 37/30, F17C 13/08

(54) **AIRCRAFT WITH SUSPENDED HYDROGEN TANK**

(71) Applicant: Airbus S.A.S., 31700 Blagnac (FR)
(72) Inventor: METZNER, Christian, 82024 Taufkirchen (DE); BEIER, Uwe, 82024 Taufkirchen (DE); ZIMMERMANN, Kristian, 82024 Taufkirchen (DE)
(74) Representative: KASTEL Patentanwälte PartG mbB

(57) **Abstract**

The invention relates to an aircraft (10), comprising a hydrogen consumer (12) and a hydrogen supply device (14) for supplying the hydrogen consumer (12) with hydrogen, the hydrogen supply device (12) having a cryogenic hydrogen tank (16) for storing liquid hydrogen. In order to lower the weight while improving performance of the hydrogen tank (16) during different flight conditions, embodiments of the aircraft further comprise a suspension arrangement (34) with suspension elements (44, 44-1, 44-2) for suspending the hydrogen tank (16) on a structure (36) of the aircraft (10), wherein the hydrogen tank (16) comprises a tank wall (30) made from fibre reinforced composite material, and wherein the suspension arrangement (34) comprises a plurality of first tensile loaded dry fibre suspension elements (44-1) fixed to load introduction areas (46) on the hydrogen tank (16) such that the suspension elements (46) extend essentially tangential to a surface of the hydrogen tank (16) at the associated load introduction area (46).

## Description

The invention relates to an aircraft, especially an airplane or a helicopter, comprising a hydrogen consumer and a hydrogen supply device for supplying the hydrogen consumer with hydrogen wherein the hydrogen supply device has a cryogenic hydrogen tank for storing liquid hydrogen. Such aircrafts are known from references [1]-[3].

For technical background and prior art, reference is made to the following citations:
EP 3 066 711 B1
EP 3 498 664 B1
EP 2 878 795 B1
US 2022 0 089 021 A1
US 3 659 817 A1
US 2018 0 072 436 A1
DE 196 25 492 C1
US 9 938 025 A
DE 102 55 876 A1
US 10 774 990 A1
US 2015 0 102 040 A1
US 9 868 544 A
US 6 019 316 A

[4] relates to a car with a gas tank mounted with rigid mountings and a safety catch guard including cables. [5] relates to a ship for transporting liquid cargo with huge containers made from nickel steel suspended with cables or chains. [6] relates to a spacecraft having a cryogenic tank with a PTFE mesh inside the tank. [7] relates to a scientific satellite in which a tank is mounted with rods made from fibre reinforced composite with disruptions in fibre layers. [8] relates to a rocket wherein a cryogenic tank is mounted with link rods. [9] relates to a gas tank for vehicles wherein the gas tank is made from woven or non-woven textile with a metallic liner. [10] relates to cryogenic stationary tanks mounted with oblique rigid rods or plates. [11] to [12] relate to mounting of flexible tanks made at least partially from rubber within helicopters.

Preferred embodiments of the invention relate to H2 powered aircrafts, especially civil fixed wing aircrafts, helicopters or other rotorcrafts, and drones.

An object of the invention is to provide an H2 powered aircraft having less weight and a better performance of storing LH2 during different flight conditions.

For achieving such object, the invention provides an aircraft according to claim 1.

Advantageous embodiments are subject-matters of the dependent claims.

The invention provides an aircraft, comprising: a hydrogen consumer, a hydrogen supply device for supplying the hydrogen consumer with hydrogen, the hydrogen supply device having a cryogenic hydrogen tank for storing liquid hydrogen, and a suspension arrangement with suspension elements for suspending the hydrogen tank on a structure of the aircraft, wherein the hydrogen tank comprises a tank wall made from fibre reinforced composite material, wherein the suspension arrangement comprises a plurality of first tensile loaded dry fibre suspension elements fixed to load introduction areas on the hydrogen tank such that the fibre suspension elements extend essentially tangential to a surface of the hydrogen tank at the associated load introduction area.

Preferably, the suspension arrangement comprises second tensile loaded dry fibre suspension elements extending in a radial and an axial direction with respect to a middle axis of the hydrogen tank.

Preferably, the suspension elements are made at least partially from fibres only, preferably from fibres chosen from the group consisting of Kevlar fibres, carbon fibres, glass fibres, spider silk fibres, and PE fibres.

Preferably, the load introduction areas are locally reinforced.

Preferably, the load introduction areas comprise a higher fibre density as other parts of the hydrogen tank.

Preferably, the load introduction areas comprise looped fibre rovings, preferably extending around the tank wall.

Preferably, the load introduction areas are arranged on at least one load distribution belt surrounding the tank wall.

Preferably, the suspension elements are joined to the load introduction areas by bonding, by adhesives, by welding, and/or by co-curing.

Preferably, at least some of the suspension elements have elastic and/or dampening properties.

Preferably, at least some of the suspension elements comprise at least one elastic section.

Preferably, at least some of the suspension elements comprise at least one section preformed as a spiral spring.

Preferably, at least some of the suspension elements have a common crossing point for stabilization.

Preferably, the hydrogen tank has an inner tank wall made from fibre reinforced composite material and a thermal insulation surrounding the inner tank wall, wherein the load introduction areas are arranged on the thermal insulation.

Preferably, the hydrogen tank has a cylindrical tank area and dome areas at the ends thereof.

Lightweight energy storage is a key topic for next generation aircrafts. Hydrogen offers high energy densities, whereas the storage technique (cryogenic, compressed, solid state/absorbed) is a key issue. Hydrogen can be compressed and/or cooled down to cryogenic temperatures to increase the volumetric and gravimetric energy density. Compressed and cryogenic hydrogen are the techniques of choice for today's vehicles, like cars or airplanes. Cryogenic tanks can achieve the lowest added weight wherein about 0.2 kg - 0.5 kg tank weight is needed per kg stored H2. Conventional tanks work with applied inner pressure to avoid gas ingress from outside.

Hence, lightweight but eco-efficient LH2 tank systems are one of key areas enabling zero emission air mobility e.g., civil fixed wing aircrafts, helicopters, drones, etc.

Classic LH2-tank walls are typically made from metal. Making the tank wall from aluminium would result to a comparatively thick tank wall in order to withstand internal pressure during different flight conditions. However, such thick tank walls result in globally inherent stiffness resulting in less numbers of load introductions and locally inherent stiffness leading to better load introduction performance.

Weight saving approaches are aiming at composite tanks. Because of the high absolute and specific in-plane mechanical performance level, such materials can withstand inner pressure much better and result in very thin tank walls. However, there is the tendency that such "membrane-like" tanks walls could deform easily when global and local external loads are introduced. Consequently, one approach could be to provide such tanks with many load introductions with many local load introduction reinforcements. This would not only lead to additional weight but also lead to many thermal bridges jeopardising the capability of such configurations to work as LH2 tank (-253°C). Embodiments of the invention provide another approach for mounting thin-walled composite tanks within aircrafts, wherein load introduction elements are as mild as possible, especially with regard to load distribution, load case and thermal throughput.

One idea is using essentially tangential (relative to the tank wall surface) tensile loaded dry fibre suspension elements. Essentially tangential means here a range from -10° to +10° around the direction tangential to the surface where the load is introduced. Preferably, the first suspension elements extend exactly tangential, or with a deviation of maximum 5° from the tangential direction.

Preferred embodiments include a tank jacket that is connected to the structure with at least one suspension element, being at least on of it (rather) tangential arranged relative to the jacket surface.

According to preferred embodiments, the tank is mounted to a structure of the aircraft by using a suspension arrangement with several suspension elements.

According to preferred embodiments, one or more suspension elements are tensile loaded.

Another advantage of the suspension arrangement of preferred embodiments of the invention is an ability to compensate for thermal elongations and/or shrinkage of the whole tank compared to the surrounding structure. For example, according to preferred embodiments, thermal elongations or shrinkage just result in slight alterations of an angle of the suspension elements.

According to preferred embodiments, the suspension elements are made at least partially from fibres only (Kevlar, CF, GF, Spider silk, PE, ...). Especially, the suspension elements have at least one length section which is solely constituted by fibres only.

According to preferred embodiments, the suspension elements are tensile loaded dry fibre suspension elements. While usual composite materials are made from fibres and matrix material, dry fibres have no or no significant amount of matrix material. Due to the reduction of thermal conductivity by omitting the matrix material, thermal conduction between the tank and the structure can be reduced.

According to preferred embodiments, load introduction areas are made from looped fibre roving.

According to preferred embodiments, load introduction areas are locally reinforced.

According to preferred embodiments, load introduction joining is done by adhesives, welding, co-curing, ...

According to preferred embodiments, the suspension elements provide damping and elastic properties intrinsically or geometrically (transition of straight fibres into spiral spring composite element).

Preferred embodiments have suspension elements with a crossing point for stabilization.

Embodiments of the invention are explained below referring to the accompanying drawings in which:
- Fig. 1: shows a side view of a first embodiment of an airplane as example for an aircraft equipped with hydrogen consumers and a hydrogen supply device including a hydrogen tank;
- Fig. 2: shows a perspective view of a second embodiment of an airplane as example for a second embodiment of an aircraft equipped with hydrogen consumers and a hydrogen supply device including a hydrogen tank;
- Fig. 3: shows a sectional view through a part of the aircraft of Fig. 1 showing the hydrogen tank and a suspension arrangement for suspending the hydrogen tank to a structure of the aircraft;
- Fig. 4: shows a schematic view, partly in section, of a part of the aircraft of Fig. 2 showing the hydrogen tank and a suspension arrangement for suspending the hydrogen tank to a structure of the aircraft;
- Fig. 5: shows a schematic perspective view of the hydrogen tank of Fig. 4 with the suspension arrangement;
- Fig. 6: shows a schematic perspective and sectional view of a tank wall of the hydrogen tank of Fig. 4 and 5, wherein a thermal insulation of the hydrogen tank is omitted for illustrative purposes, together with the suspension arrangement;
- Fig. 7: is a view similar to Fig. 6 wherein the thermal insulation and an outer fixation structure of the aircraft, e.g., a fuselage, are shown;
- Fig. 8: is a section through an edge region of the hydrogen tank of Figs. 4 to 7;
- Fig. 9: is a schematic front view of another embodiment of the suspension arrangement together with the hydrogen tank;
- Fig. 10: is a schematic front view of a further embodiment of the suspension arrangement together with the hydrogen tank; and
- Fig. 11: is a schematic front view of a further embodiment of the suspension arrangement together with the hydrogen tank.

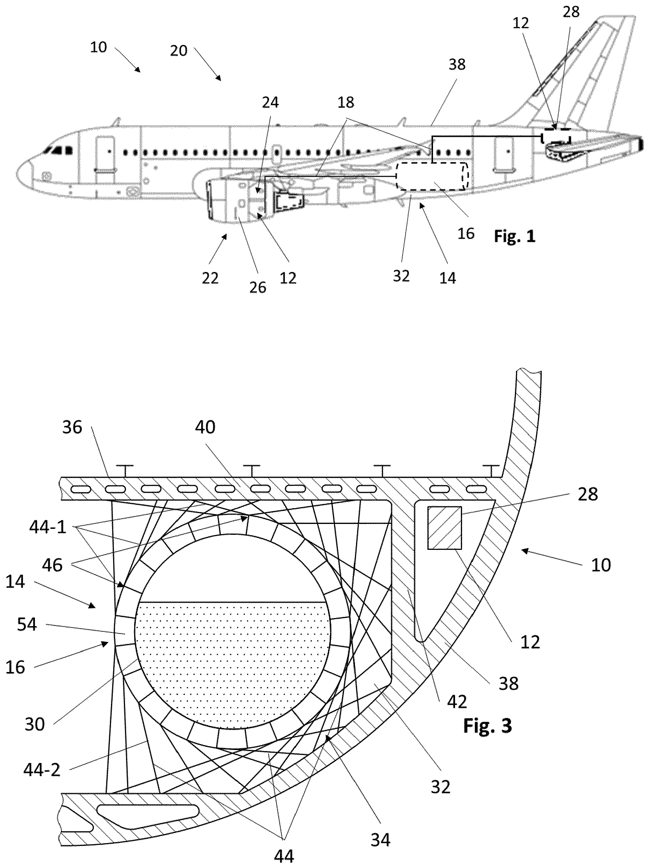

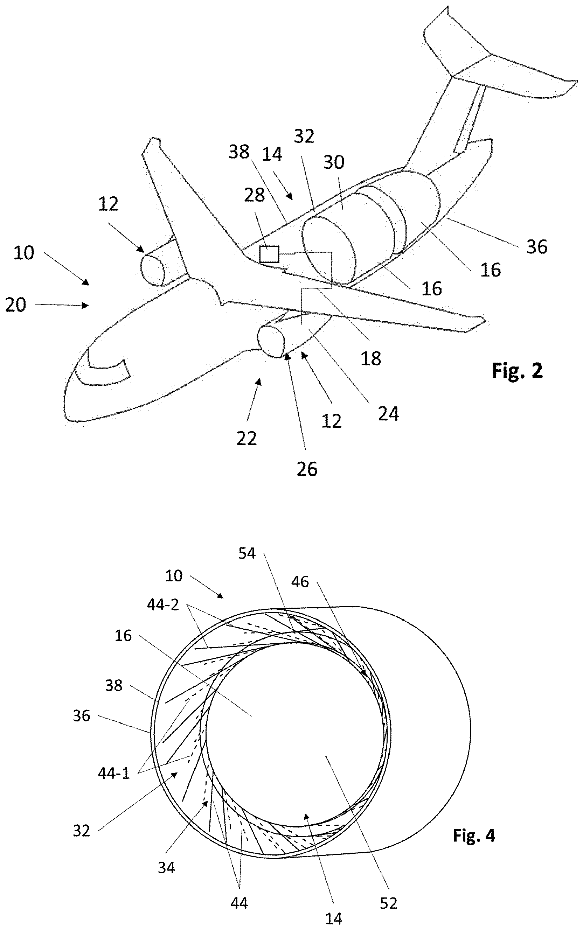

Fig. 1 and 2 show different embodiments of an aircraft 10 comprising at least one hydrogen consumer 12 and a hydrogen supply device 14 for supplying the at least one hydrogen consumer 12 with hydrogen. The hydrogen supply device 14 has at least one cryogenic hydrogen tank 16 for storing liquid hydrogen and hydrogen lines 18 for transporting hydrogen from the hydrogen tank 16 to the hydrogen consumer 12. In several embodiments, the aircraft 10 has a plurality of hydrogen consumers 12, such as hydrogen combustion engines, especially turbines 24, or fuel cells 28. In several embodiments, the hydrogen supply device 14 comprises a plurality of hydrogen tanks 16 which are all individually mounted in the manner as explained below in more detail.

Figs. 1 and 2 show an aircraft 10 in form of an airplane 20. According to further embodiments (not shown), the aircraft 10 may be a rotorcraft such as a helicopter.

Different hydrogen consumers 12 are possible. Preferably, the hydrogen consumers 12 are part of a propulsion system 22 of the aircraft 10. The propulsion system 22 shown includes turbines 24 as part of engines 26. The turbines 24 are configured to burn hydrogen supplied from the hydrogen tank 16. The engines 26 may be hybrid engines which can be powered by the turbines 24 and with electric power. For providing electric power, the aircraft 10 may be equipped with at least one fuel cell 28 as a further hydrogen consumer 12.

The at least one hydrogen tank 16 has, e.g., a cylindrical shape. The hydrogen tank 16 is configured as a cryogenic tank for storing liquid hydrogen (LH2) at cryogenic temperatures. A tank wall 30 of the hydrogen tank 16 is made of fibre reinforced composite material, especially CFRP.

For example, the hydrogen tank 16 may have a mass of 40 kg to 200 kg, preferably 50 to 80 kg, e.g., 67 kg. According to an embodiment, the hydrogen tank 16 may store at maximum 100 kg to 300 kg LH2, e.g., 150 kg LH2. In order to save weight, the tank wall 30 has a small thickness, for example the thickness t of the tank wall is between 0.5 mm and 4 mm, preferably, 1 mm to 3 mm, and most preferred less than 1.5 mm. Since the hydrogen tank 16 is used as in-plane tank, it has to withstand loads in different flight conditions. For example, load requirements may state that the hydrogen tank 16 should withstand accelerations up to 9g horizontally and up to 3g vertically.

The embodiments of the aircraft 10 comprise special installation and suspension arrangements for installing or suspending such lightweight and thin-walled hydrogen tank(s) 16 such that they withstand different flight conditions and maintain their performance to keep the LH2 therein.

Fig. 3 shows a compartment 32 with the hydrogen tank 16 of the aircraft 10 of the embodiment of Fig. 1, while Fig. 4 shows the corresponding compartment 32 with the hydrogen tank 16 of the aircraft 10 of the embodiment of Fig. 2. As visible from Figs. 3 and 4, the aircraft 10 comprises a suspension arrangement 34 for suspending the hydrogen tank 16 on a structure 36 of the aircraft 10. The structure 36 may be a fuselage 38 of the aircraft 10 as shown in Figs. 2 and 4, or an inner structure such as a cabin bottom 40 or partition walls 42 of the aircraft 10 as shown in Figs. 1 and 3.

The suspension arrangement 34 comprises several suspension elements 44 wherein first ends thereof are fixed to the structure 36 and second ends thereof are fixed to load introduction areas 46 on the hydrogen tank 16. The suspension elements 44 are made from dry fibres, i.e., at least one section along the extension of the suspension element 44 is constituted by fibres only. Dry fibres are fibres with no or no significant amount of matrix material.

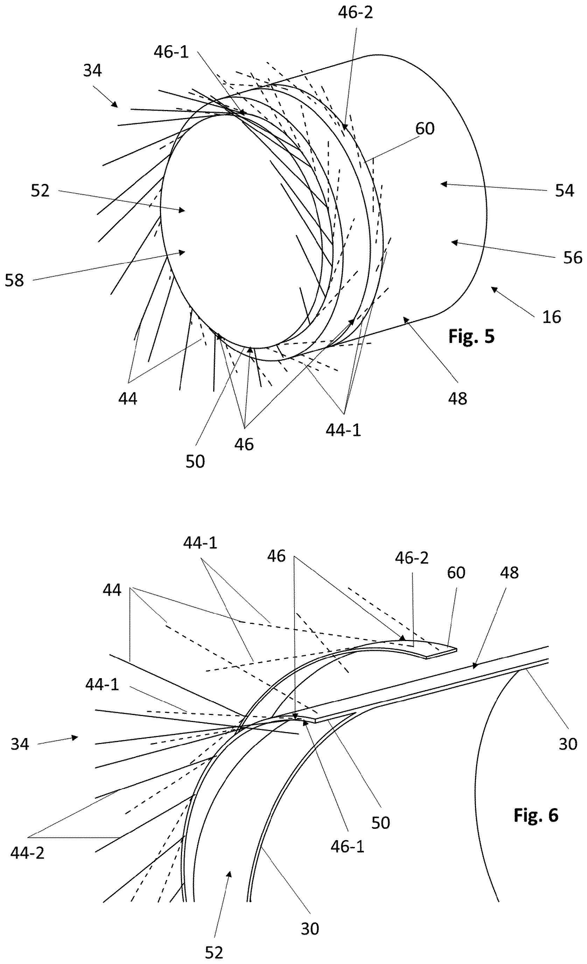

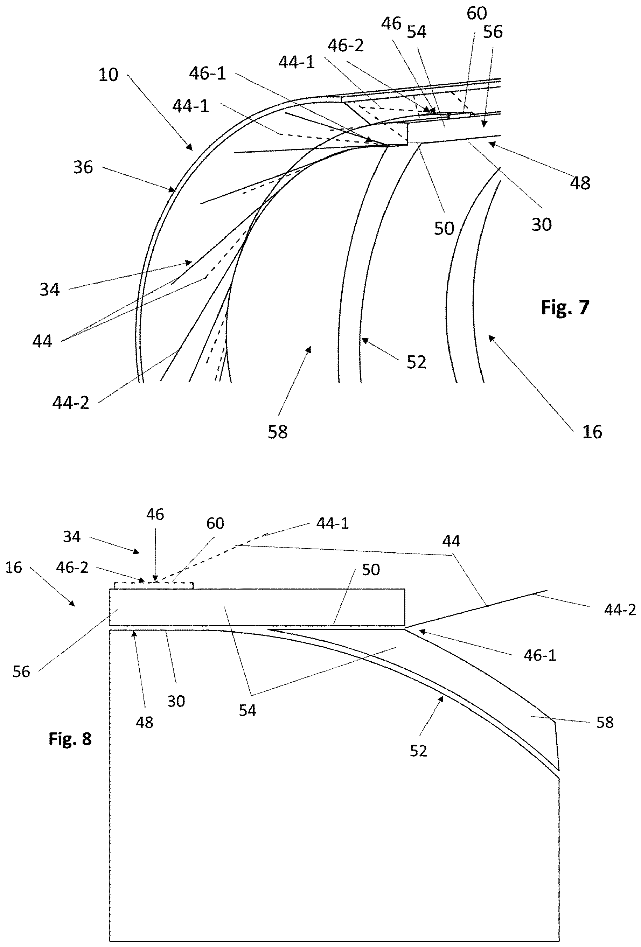

Some preferred embodiments of the suspension arrangement are explained in more detail now referring to Figs. 3 to 8.

Especially, the suspension arrangement 34 holds the hydrogen tank 16 via combinatorial geometries based on high tenacity fibres.

The suspension arrangement 34 comprises first suspension elements 44-1 wherein fibres are attached to the thin skin or surface of the tank wall 30 at the load introduction area 46 in essential tangential direction to avoid loads in the normal direction. According to some embodiments, the first suspension elements 44-1 extend exactly tangential to the surface of the tank wall 30 at the load introduction area 46. However, some deviations from the tangential direction, e.g., up to 5° or even 10°, are possible.

Further, the suspension arrangement 34 may comprise second suspension elements 44-2 extending in other directions, especially obliquely in a radial and axial direction of the hydrogen tank 16. Some embodiments of the suspension arrangement 34 comprise a fibre network in order to distribute the loads. The fibre direction, spacing angles thicknesses of the fibres of the suspension elements 44 are optimized to the specific loading conditions and outer fixation requirements. According to some embodiments, the fibre network is optimized to compensate thermal elongations and shrinkage of the whole tank 16 compared to the surrounding structure 36.

The suspension elements 44 are made from high tenacity fibres with low thermal conductivity such as Kevlar fibres or glass fibres. Other possible fibre materials are carbon or spider silk (natural or synthetic). Especially, at least a whole section in the force path of the suspension element 44, 44-1, 44-2 is solely constituted by dry fibres (without binder or matrix material) in order to avoid or reduce thermal bridges. End sections may comprise matrix material (for co-curing) or adhesive.

Details of a possible embodiments of the hydrogen tank 16 and the suspension arrangement 34 are explained referring to Figs. 4 to 8. Therein, one axial end region of the hydrogen tank 16 is shown. The other axial end region has a corresponding configuration.

The tank wall 30 may be an inner tank wall of the hydrogen tank 16. The tank wall 30 comprises a cylindrical area 48, an optional ring-shaped skirt 50 extending further from the cylindrical area 48 in axial direction, and a dome area 52 as end cap on each axial end of the hydrogen tank 16.

The hydrogen tank 16 has a thermal insulation 54 surrounding the tank wall 30. The thermal insulation 54 has a cylindrical part 56 at the cylindrical area 48 and a 2d-curved part 58 at the dome area 48.

The load introduction areas 46 are locally reinforced, for example by using a higher fibre density and/or by a locally higher fibre areal weight, e.g., by using additional fibre patches.

In the embodiments shown in Figs. 4 to 8, first load introduction areas 46-1 are arranged at the skirt 50 in order to suspend the skirt 50 at the structure 36. Second load introduction areas 46-2 are arranged at the thermal insulation 54. According to some embodiments, the second load introduction areas 46-2 comprise several load distribution belts 60 spaced in axial direction (only one thereof shown). The load distribution belt 60 may be formed from looped fibre rovings surrounding and enclosing the cylindrical part 56. In some embodiments, first suspension elements 44-1 are distributed around the load distribution belt 60 and fixed thereto. Further first suspension elements 44-1 and second suspension elements 44-2 are fixed to the skirt 50.

In some embodiments (not shown), the suspension elements 44 can also be mounted on the inner tank wall directly, wherein the corresponding load introduction areas 46, 46-2 are arranged at the (inner) tank wall 30. In this case, the suspension elements 44 penetrate the thermal insulation 54, especially (an) insulation layer(s) thereof.

The fixation of the suspension elements 44 to the load introduction areas 46 is achieved by adhesive bonding, by welding, and/or by co-curing.

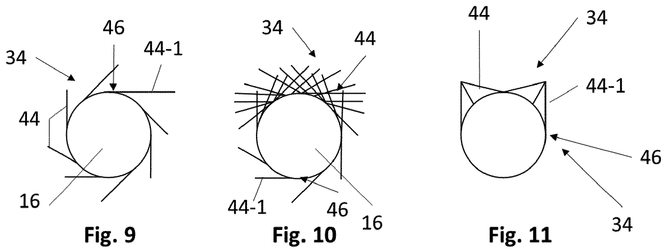

Referring to Figs. 9 to 11, different arrangements of suspension elements 44 are shown. Fig. 9 shows a homogeneous distribution of the suspension elements 44, in particular of first suspension elements (i.e., tangentially directed suspension elements) 44-1 around the hydrogen tank 16. Fig. 10 shows an embodiment of the suspension arrangement 34 wherein the distribution and arrangement of suspension elements 44-1, 44-2, 44 is achieved by optimization as indicated above. Fig. 11 shows a discrete load transfer to the outer structure 36.

As visible therefrom, the suspension elements 44 may have crossing points. Further a local densification of suspension elements 44 or of fibres within the suspension elements may be provided in order to bear special load conditions.

Some embodiments provide suspension elements 44 with damping and elastic properties. Especially, a length section of the fibres and/or of the whole suspension element 44 may be pre-formed as a spiral spring composite element.

In some embodiments (not shown) the hydrogen tank 16 has several tank walls 30, e.g., an inner tank wall and an outer tank wall, wherein all tank walls 30 are made from fibre reinforced composite material.

Since the suspension elements 44, 44-1, 44-2 consist at least partially only of dry fibres, they are flexible and can bear large tensile loads, but not compressive loads. The suspension elements 44, 44-1, 44-2 may be configured as single fibres, fibre rovings, a bundle of unidirectional fibres or textiles with longitudinal fibres and transversal fibres. The suspension elements 44, 44-1, 44-2 may be in the form of cables or ropes. During use, the suspension elements 44, 44-1 ,44-2 are tensile loaded.

An aircraft (10) has been described which comprises a hydrogen consumer (12) and a hydrogen supply device (14) for supplying the hydrogen consumer (12) with hydrogen, the hydrogen supply device (12) having a cryogenic hydrogen tank (16) for storing liquid hydrogen. In order to lower the weight while improving performance of the hydrogen tank (16) during different flight conditions, embodiments of the aircraft (10) comprise a suspension arrangement (34) with suspension elements (44, 44-1, 44-2) for suspending the hydrogen tank (16) on a structure (36) of the aircraft (10), wherein the hydrogen tank (16) comprises a tank wall (30) made from fibre reinforced composite material, and wherein the suspension arrangement (34) comprises a plurality of first tensile loaded dry fibre suspension elements (44-1) fixed to load introduction areas (46) on the hydrogen tank (16) such that the suspension elements (46) extend essentially tangential to a surface of the hydrogen tank (16) at the associated load introduction area (46).

### Reference sign list:

- 10: aircraft
- 12: hydrogen consumer
- 14: hydrogen supply device
- 16: hydrogen tank
- 18: hydrogen line
- 20: airplane
- 22: propulsion system
- 24: turbine
- 26: engine
- 28: fuel cell
- 30: tank wall
- 32: compartment
- 34: suspension arrangement
- 36: structure
- 38: fuselage
- 40: bottom
- 42: partition wall
- 44: suspension element
- 44-1: first suspension element (tangential)
- 44-2: second suspension element
- 46: load introduction area
- 46-1: first load introduction area (skirt/tank wall)
- 46-2: second load introduction area (insulation)
- 48: cylindrical area
- 50: skirt
- 52: dome area
- 54: thermal insulation
- 56: cylindrical part
- 58: 2d-curved part
- 60: load introduction belt

## Claims

1. Aircraft (10), comprising
a hydrogen consumer (12),
a hydrogen supply device (14) for supplying the hydrogen consumer (12) with hydrogen, the hydrogen supply device (12) having a cryogenic hydrogen tank (16) for storing liquid hydrogen, and
a suspension arrangement (34) with suspension elements (44, 44-1, 44-2) for suspending the hydrogen tank (16) on a structure (36) of the aircraft (10), wherein the hydrogen tank (16) comprises a tank wall (30) made from fibre reinforced composite material,
wherein the suspension arrangement (34) comprises a plurality of first tensile loaded dry fibre suspension elements (44-1) fixed to load introduction areas (46) on the hydrogen tank (16) such that the suspension elements (46) extend essentially tangential to a surface of the hydrogen tank (16) at the associated load introduction area (46).

2. Aircraft (10) according to claim 1, **characterized in that** the suspension arrangement (34) comprises second tensile loaded dry fibre suspension elements (44-2) extending in a radial and an axial direction with respect to a middle axis of the hydrogen tank (16).

3. Aircraft (10) according to any of the preceding claims, **characterized in that** the suspension elements (44, 44-1, 44-2) are made at least partially from fibres only, preferably from fibres chosen from the group consisting of Kevlar fibres, carbon fibres, glass fibres, spider silk fibres, and PE fibres.

4. Aircraft (10) according to any of the preceding claims, **characterized in that** the load introduction areas (46)
4.1 are locally reinforced, or
4.2 comprise a higher fibre density as other parts of the hydrogen tank (16), or
4.3 comprise looped fibre rovings, preferably extending around the tank wall (30), or
4.4. are arranged on at least one load distribution belt (60) surrounding the tank wall (30).

5. Aircraft (10) according to any of the preceding claims, **characterized in that** the suspension elements (44, 44-1, 44-2) are joined to the load introduction areas (46) by bonding, by adhesives, by welding, and/or by co-curing.

6. Aircraft (10) according to any of the preceding claims, **characterized in that** at least several of the suspension elements (44, 44-1, 44-2):
6.1 have elastic and/or dampening properties,
6.2 comprise at least one elastic section,
6.3 comprise at least one section preformed as a spiral spring.

7. Aircraft (10) according to any of the preceding claims, **characterized in that** at least some of the suspension elements (44, 44-1, 44-2) have a common crossing point for stabilization.

8. Aircraft (10) according to any of the preceding claims, **characterized in that** the hydrogen tank (16)
8.1 has an inner tank wall made from fibre reinforced composite material and a thermal insulation (54) surrounding the inner tank wall, wherein at least some of the load introduction areas (46-2) are arranged on the thermal insulation (54),
8.2 has a cylindrical area (48) and dome areas (52) at the ends thereof.
